(19) Europäisches Patentamt

European Patent Office

Office européen des brevets

(11) EP 0 518 604 B1

(12) **EUROPEAN PATENT SPECIFICATION**

(45) Date of publication and mention
of the grant of the patent:
**09.09.1998 Bulletin 1998/37**

(51) Int Cl.⁶: **C08F 10/02**, C08F 4/654

(21) Application number: **92305256.7**

(22) Date of filing: **09.06.1992**

(54) **High activity polyethylene catalysts prepared from oxidizing agents**

Hochaktiver Polyethylenkatalysator, hergestellt aus Oxidationsmittel

Catalyseurs de polymérisation d'éthylène à haute activité, préparés à partir d'agent oxidant

(84) Designated Contracting States:
**BE DE FR GB IT NL**

(30) Priority: **10.06.1991 US 712298**

(43) Date of publication of application:
**16.12.1992 Bulletin 1992/51**

(73) Proprietor: **MOBIL OIL CORPORATION
Fairfax, Virginia 22037-0001 (US)**

(72) Inventors:
- **Mink, Robert I.
  Warren, New Jersey 07059 (US)**
- **Nowlin, Thomas Edward
  Cranbury, New Jersey 08512 (US)**

(74) Representative: **Hucker, Charlotte Jane et al
Gill Jennings & Every
Broadgate House,
7 Eldon Street
London EC2M 7LH (GB)**

(56) References cited:
EP-A- 0 032 308        EP-A- 0 173 485
FR-A- 2 394 557

Remarks:
The file contains technical information submitted
after the application was filed and not included in this
specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a catalyst for ethylene polymerization and copolymerization, to a method for producing such a catalyst and to a process for ethylene polymerization and ethylene copolymerization with alpha-olefins. In particular, the present invention relates to a high activity catalyst, and to a method for preparation thereof and to a highly productive polymerization process carried out with the catalyst of the invention. The catalysis of the invention results in high density polyethylene (HDPE) or linear low density polyethylene (LLDPE) having an intermediate molecular weight distribution, as evidenced by values of melt flow ratio (MFR) [which is $(I_{21}/I_{2.16})$] of 30-50 at a flow index $(I_{21})$ of about 7, and having improved flow index response.

EP-A 0 032 308 discloses a process wherein ethylene is polymerised or copolymerised with another olefin monomer, using a catalyst system comprising an organic metal compound and a titanium-containing material which is obtained by reacting together an inert particulate material, an organic magnesium compound, a halogen-containing compound such as carbon tetrachloride, silicon tetrachloride, trichlorosilane, phosphorus trichloride or boron trichloride and titanium tetrachloride. The process can be used to effect copolymerization of ethylene with an alpha-olefin monomer such as butene-1 in a fluidised bed reactor.

EP-A 0 173 485 discloses a process wherein ethylene and alpha-olefins are homopolymerized or copolymerized with another olefin monomer in the presence of a catalyst system comprising an organo metal cocatalyst and a titanium-containing catalyst component, said titanium-containing catalyst component being obtained by reacting together a porous particulate material, an organic magnesium compound, an oxygen containing compound, a halogen, interhalogen compound or halosilane and titanium tetrachloride.

In commercial applications, ethylene homopolymers and ethylene/1-olefins copolymers with either a very narrow MWD or very broad MWD are important. However, recently polymers with intermediate MWDs have been found to be important for blending two or more polymer samples into commercially important products e.g. for film or blow-molding applications.

The two or more polymer samples which are blended into the final product each have a very different molecular weight. One sample will usually have a relatively very high molecular weight as indicated by a HLMI of 0.4-5.01 while the other polymer sample will have a relatively very low molecular weight as indicated by a melt index ($I_{2.16}$ of 20-2000). These polymer samples can be prepared separately in individual polymerization reactors or can be prepared in tandem polymerization reactors where the relatively high and low molecular weight fractions are prepared sequentially in the polymerization process.

One of the measures of the molecular weight distribution of the resin is melt flow ratio (MFR), which is the ratio of high load melt index (HLMI or $I_{21}$) to melt index ($I_2$) for a given resin. The melt flow ratio is believed to be an indication of the molecular weight distribution of the polymer, the higher the value, the broader the molecular weight distribution. Resins having relatively low MFR values, e.g., of 20 to 30, have relatively narrow molecular weight distribution.

Polymers having relatively high MFR values, e.g. of 70 to 150 have a relatively broad molecular weight distribution. Consequently, polymer with an MFR value of 30 to 60 are said to have an intermediate molecular weight distribution.

Another important property of a ethylene homopolymerization catalyst or ethylene/alpha olefin copolymerization catalyst is the ability to control polymer molecular weight with relatively low amounts of hydrogen in the polymerization process. Catalysts which give rise to a relatively high melt index resin under a certain set of polymerization conditions is said to exhibit relatively good melt index response.

Accordingly, it is important to provide a catalyst composition capable of producing alpha-olefin polymers and copolymers having an intermediate molecular weight distribution (MFR values between 30 and 60).

It is an object of the present invention to provide a high activity catalyst composition which produces alpha-olefin polymers with high productivity.

It is an additional object of the present invention to provide a catalytic process for polymerizing alpha-olefins which yields polyethylene of an intermediate molecular weight distribution at high productivity rates.

It is an additional object of the present invention to provide a catalytic process for polymerising alpha-olefins which yields polyethylene of an intermediate molecular weight distribution with improved flow index response.

Therefore it is the primary objective of this invention to provide a catalyst/cocatalyst system with the combination of properties providing (1) relatively high activity (2) an intermediate MWD and (3) relatively good flow index response. All three catalyst attributes are provided by the catalysts described in this invention.

A supported alpha-olefin polymerisation catalyst composition of this invention is prepared in a multi-step process.

This invention provides an ethylene homopolymerisation or copolymerisation catalyst for producing polymer having an MFR from 20 to 250, which catalyst is obtainable by:

(i) providing a slurry of a solid porous support having -OH groups in a non-polar solvent;
(ii) impregnating the support having -OH groups with $RMgR^1$ compound to form an intermediate, which intermediate has an -OH group: Mg ratio of less than 1, wherein each R and $R^1$, which may be the same or different, represents an alkyl group of 1 to 12 carbon atoms;

(iii) treating the intermediate of step (ii) with an amount of carbon tetrachloride which is soluble in the non-polar solvent and is reactive with the intermediate of step (ii) and which amount is effective to provide a carbon tetrachloride: $RMgR^1$ molar ratio from 0.3 to 3 to form a step (iii) product;

(iv) treating the step (iii) product with $TiCl_4$ to form a titanium containing intermediate which has an -OH group: Ti ratio of less than 1; and

(v) combining the titanium containing intermediate with triethylaluminium or diisobutylaluminium hydride as a cocatalyst, whereby the MFR of the polymer produced is from 30 to 60 at an HLMI of 0.1 to 40,000.

The polymers prepared in the presence of the catalyst composition of this invention are linear polyethylenes which are homopolymers of ethylene or copolymers of ethylene and higher alpha-olefins. The polymers exhibit intermediate values of melt flow ratio (MFR), as compared to similar polymers prepared in the presence of previously-known catalyst compositions, e.g., those disclosed by Nowlin et al., U.S. Patent 4,481,301. Thus, the polymers prepared with the catalyst compositions of the invention are especially suitable for the production of films by blending two or more components of polyethylene of various molecular weights.

Moreover, the catalysts exhibit improved flow index response. Flow index response of a catalyst refers to the ability of a particular catalyst to produce relatively lower molecular weight polymer than other catalysts under the same polymerization conditions. Polymer samples prepared from one such catalyst will have a relatively higher flow index (HLMI) value relative to polymer prepared from some other catalyst with relatively poorer flow index response. The catalysts of this invention exhibit relatively good flow index response, produce polymer of an intermediate molecular weight distribution at relatively high productivity.

Catalysts produced according to the present invention are described below in terms of the manner in which they are made.

Catalyst Synthesis

The carrier material is a solid, particulate, porous, preferably inorganic material. These carrier materials include inorganic materials, such as oxides of silicon and/or aluminum.

The carrier material is suitably used in the form of a dry powder having an average particle size of from 1 μm to 250 μm, preferably from 10 μm to 150 μm. The carrier material is also porous and suitably has a surface area of at least 3 square meters per gram ($m^2$/gm), and preferably at least 50 $m^2$/gm. The carrier material should be dry, that is, free of absorbed water. Drying of the carrier material can be effected by heating at 100°C to 1000°C, preferably at 600°C. When the carrier is silica, it is heated to at least 200°C, preferably 200°C to 850°C and most preferably at 600°C. The carrier material must have at least some active hydroxyl (OH) groups to produce the catalyst composition of this invention.

In the most preferred embodiment, the carrier is silica which, prior to the use thereof in the first catalyst synthesis step, has been dehydrated by fluidizing it with dry nitrogen or dry air and heating at about 600°C for about 16 hours to achieve a surface hydroxyl group concentration of about 0.7 millimoles per gram (mmols/gm). The silica of the most preferred embodiment is a high surface area, amorphous silica (surface area = 300 $m^2$/gm; pore volume of 1.65 $cm^3$/gm), and it is a material marketed under the tradenames of Davison 952 or Davison 955 by the Davison Chemical Division of W.R. Grace and Company. The silica is in the form of spherical particles, e.g., as obtained by a spray-drying process.

The carrier material is slurried in a non-polar solvent and the resulting slurry is contacted with at least one organomagnesium composition having the empirical formula (I). The slurry of the carrier material in the solvent is prepared by introducing the carrier into the solvent, preferably while stirring, and heating the mixture to 25 to 100°C, preferably to 40 to 60°C. The slurry is then contacted with the aforementioned organomagnesium composition, while the heating is continued at the aforementioned temperature.

The organomagnesium composition suitably has the empirical formula $R_m Mg R'_n$ where R and R' preferably are the same or different $C_2$-$C_{12}$ alkyl groups, preferably $C_4$-$C_{10}$ alkyl groups, more preferably $C_4$-$C_8$ normal alkyl groups, and most preferably both R and R' are butyl groups, and m and n are each 0, 1 or 2, providing that m + n is equal to the valence of Mg.

Suitable non-polar solvents are materials in which all of the reactants used herein, i.e., the organomagnesium composition, the halogen containing reagent and the transition metal compound, are at least partially soluble and which are liquid at reaction temperatures. Preferred non-polar solvents are alkanes, such as hexane, n-heptane, octane, nonane, and decane, although a variety of other materials including cycloalkanes, such as cyclohexane, aromatics, such as benzene and ethylbenzene, may also be employed. The most preferred non-polar solvent is isopentane. Prior to use, the non-polar solvent should be purified, such as by percolation through silica gel and/or molecular sieves, to remove traces of water, oxygen, polar compounds, and other materials capable of adversely affecting catalyst activity.

In the most preferred embodiment of the synthesis of this catalyst it is important to add only such an amount of the organomagnesium composition that will be deposited - physically or chemically - onto the support since any excess of the organomagnesium composition in the solution may react with other synthesis chemicals and precipitate outside of the support. The carrier drying temperature affects the number of sites on the carrier available for the organomagnesium composition - the higher the drying temperature the lower the number of sites. Thus, the exact molar ratio of the organomagnesium composition to the hydroxyl groups will vary and must be determined on a case-by-case basis to assure that only so much of the organomagnesium composition is added to the solution as will be deposited onto the support without leaving any excess of the organomagnesium composition in the solution. Furthermore, it is believed that the molar amount of the organomagnesium composition deposited onto the support is greater than the molar content of the hydroxyl groups on the support. Thus, the molar ratios given below are intended only as an approximate guideline and the exact amount of the organomagnesium composition in this embodiment must be controlled by the functional limitation discussed above, i.e., it must not be greater than that which can be deposited onto the support. If greater than that amount is added to the solvent, the excess may react with other compounds involved in the synthesis, thereby forming a precipitate outside of the support which is detrimental in the synthesis of our catalyst and is avoided. The amount of the organomagnesium composition which is not greater than that deposited onto the support can be determined in any conventional manner, e.g., by adding the organomagnesium composition to the slurry of the carrier in the solvent, while stirring the slurry, until the organomagnesium composition is detected as a solution in the solvent.

For example, for the silica carrier heated at about 600°C, the amount of the organomagnesium composition added to the slurry is such that the molar ratio of Mg to the hydroxyl groups (OH) on the solid carrier is 1:1 to 3:1, preferably 1.1:1 to 2:1, more preferably 1.2:1 to 1.8:1 and most preferably about 1.4:1.

The organomagnesium composition dissolves in the non-polar solvent to form a solution from which the organomagnesium composition is deposited onto the carrier.

It is also possible to add such an amount of the organomagnesium composition which is in excess of that which will be deposited onto the support, and then remove, e.g., by filtration and washing, any excess of the organomagnesium composition. However, this alternative is less desirable than the most preferred embodiment described above.

The slurry is contacted with at least one transition metal compound soluble in the non-polar solvent. This synthesis step is conducted at 25 to 65°C, preferably at 30 to 55°C, and most preferably at 40 to 50°C. In a preferred embodiment, the amount of the transition metal compound added is not greater than that which can be deposited onto the carrier. The exact molar ratio of Mg to the transition metal and of the transition metal to the hydroxyl groups of the carrier will therefore vary (depending, e.g., on the carrier drying temperature) and must be determined on a case-by-case basis. For example, for the silica carrier heated at 200 to 850°C, the amount of the transition metal compound is such that the molar ratio of the transition metal, derived from the transition metal compound, to the hydroxyl groups of the carrier is 1 to 2.0, preferably 1.2 to 1.8. The amount of the transition metal compound is also such that the molar ratio of Mg to the transition metal is 0.5 to 2.0, preferably 0.7 to 1.3.

Suitable transition metal compounds used herein are compounds of metals of Groups IVA, VA, VIA or VIII of the Periodic Chart of the Elements, as published by the Fisher Scientific Compagny, Catalog No. 5-702-10, 1978, providing that such compounds are soluble in the non-polar solvents. Non-limiting examples of such compounds are titanium and vanadium halides, e.g., titanium tetrachloride, $TiCl_4$, vanadium tetrachloride, $VCl_4$, vanadium oxytrichloride, $VOCl_3$, titanium and vanadium alkoxides, wherein the alkoxide moiety has a branched or unbranched alkyl radical of 1 to 20 carbon atoms, preferably 1 to 6 carbon atoms. The preferred transition metal compounds are titanium compounds, preferably tetravalent titanium compounds. The most preferred titanium compound is titanium tetrachloride.

Mixtures of such transition metal compounds may also be used and generally no restrictions are imposed on the transition metal compounds which may be included. Any transition metal compound that may be used alone may also be used in conjunction with other transition metal compounds.

The slurry containing the organomagnesium contacted support is treated with a halogen containing reagent. The halogen containing reagent is effective to react with the slurry formed by contacting the carrier material with the organomagnesium compound. Reaction is usually detectable by color change. The molar ratio of halogen containing reagent to organomagnesium can range from 0.3 to 3. The halogen containing reagent is selected from the group consisting of tin (IV) chloride, iodine, iodine monochloride, carbon tetrachloride; chloroform; 1,1,1 trichloroethane; 1,1 dichloroethane and diphenyl dichloromethane. The temperature of treatment with the halogen containing reagent is 20 to 60°C. The effect of this treatment step is to increase the activity and flow index response of the catalyst and produce a polymer with an intermediate molecular weight distribution as indicated by Melt Flow Ratios of 30-60.

After synthesis of the precursor is completed, the non-polar solvent is slowly removed, e.g., by distillation or evaporation. The temperature at which the non-polar solvent is removed from the synthesis mixture can affect the productivity of the resulting catalyst composition. Lower solvent removal temperatures produce catalyst compositions which are more active than those produced with higher solvent removal temperatures. For this reason, it is preferred to remove the non-polar solvent at 40 to 65°C, preferably at 45 to 55°C and most preferably at about 55°C by drying, distillation or evaporation or any other conventional means. Excess amounts of halogen containing reagent can be removed simultaneously with the non-polar solvent(s). The excess halogen containing reagent may also be removed by filtration and washing the silica prior to addition of the transition metal compound.

The resulting free-flowing powder, referred to herein as a catalyst precursor, is combined with the activator. It was found that the combination of the precursor of this invention with the activator produces an alpha-olefin polymerization catalyst composition having very high activity, as compared to a catalyst composition comprising the same catalyst precursor, but produced without the treatment with halogen containing reagent. The catalyst precursor is combined with a conventional Ziegler-Natta catalyst activator such as aluminum alkyls or aluminum alkyl hydrides. The type of activator is important in controlling the flow index response of the catalyst and the molecular weight distribution of the polymer. Triethylaluminum (TEAL) is preferred to produce a polymer with a Melt Flow Ratio of 35 to 40 while diisobutylaluminum hydride is preferred to produce a polymer with a Melt Flow Ratio of 40 to 50. These are referred to as polymers with a relatively intermediate molecular weight distribution.

The activator is used in an amount which is at least effective to promote the polymerization activity of the solid catalyst component of this invention. The amount of the activator is sufficient to give an Al:Ti molar ratio of 15:1 to 1000:1, preferably 20:1 to 300:1, and most preferably 25:1 to 100:1.

Without wishing to be bound by any theory of operability, it is believed that the catalyst composition of this invention is produced by chemically impregnating the support with catalyst components sequentially added to the slurry of the carrier in the non-polar solvent. Therefore, all of the catalyst synthesis chemical ingredients must be soluble in the non-polar solvent used in the synthesis. The order of addition of the reagents may also be important since the catalyst synthesis procedure is predicated on the chemical reaction between the chemical ingredients sequentially added to the non-polar solvent (a liquid) and the solid carrier material or a catalyst intermediate supported by such a material (a solid). Thus, the reaction is a solid-liquid reaction. For example, the catalyst synthesis procedure must be conducted in such a manner as to avoid the reaction of two or more reagents in the non-polar solvent to form a reaction product insoluble in the non-polar solvent outside of the pores of the solid catalyst support. Such an insoluble reaction product would be incapable of reacting with the carrier or the catalyst intermediate and therefore would not be incorporated onto the solid support of the catalyst composition.

The catalyst precursors of the present invention are prepared in the substantial absence of water, oxygen, and other catalyst poisons. Such catalyst poisons can be excluded during the catalyst preparation steps by any well known methods, e.g., by carrying out the preparation under an atmosphere of nitrogen, argon or other inert gas. An inert gas purge can serve the dual purpose of excluding external contaminants during the preparation and removing undesirable reaction by-products resulting from the preparation of the neat, liquid reaction product. Purification of the non-polar solvent employed in the catalyst is also helpful in this regard.

The catalyst may be activated in situ by adding the activator and catalyst separately to the polymerization medium. It is also possible to combine the catalyst and the activator before the introduction thereof into the polymerization medium, e.g., for up to about 2 hours prior to the introduction thereof into the polymerization medium at a temperature of from -40 to 100°C.

Polymerization

Alpha-olefins are polymerized with the catalysts prepared according to the present invention by any suitable process. Such processes include polymerizations carried out in suspension, in solution or in the gas phase. Gas phase polymerization reactions are preferred, e.g., those taking place in stirred bed reactors and, especially, fluidized bed reactors.

The molecular weight of the polymer may be controlled in a known manner, e.g., by using hydrogen. With the catalysts produced according to the present invention, molecular weight may be suitably controlled with hydrogen when the polymerization is carried out at relatively low temperatures, e.g., from 30 to 105°C. This control of molecular weight may be evidenced by measurable positive change in melt index ($I_2$) of the polymer produced.

The molecular weight distribution of the polymers prepared in the presence of the catalysts of the present invention, as expressed by the MFR values, varies from 30 to 60, at HLMI ranging from 0.1 to 40,000. Preferably, the MFR values vary from 35 to 50, for HDPE products having a density of 0.930 to 0.960 g/cc, and a flow index ($I_{21.6}$) of 0.2 to 20. As is known to those skilled in the art, such MFR values are indicative of a relatively intermediate molecular weight distribution of the polymer. MFR is defined herein as the ratio of the high load melt index (HLMI or $I_{21}$), also called Flow Index (FI), divided by the melt index ($I_2$).

$$MFR = \frac{I_{21}}{I_2}$$

Lower MFR values indicate relatively more narrow molecular weight distribution polymers.

The catalysts prepared according to the present invention are highly active and may have an activity of at least 1500 to 5000 grams of polymer per gram of catalyst per 690 kPa (100 psi) of ethylene in about 1 hour.

The linear polyethylene polymers prepared in accordance with the present invention are homopolymers of ethylene or copolymers of ethylene with one or more $C_3$-$C_{10}$ alpha-olefins. Thus, copolymers having two monomeric units are possible as well as terpolymers having three monomeric units. Particular examples of such polymers include ethylene/1-butene copolymers, ethylene/1-hexene copolymers, ethylene/1-octene copolymers, ethylene/4-methyl/1-pentene copolymers, ethylene/1-butene/ 1-hexene terpolymers, ethylene/propylene/1-hexene terpolymers and ethylene/propylene/1-butene terpolymers. The most preferred comonomer is 1-hexene.

The high density polyethylene polymers produced in accordance with the present invention preferably contain at least 80 percent by weight of ethylene units.

A particularly desirable method for producing high density polyethylene polymers according to the present invention is in a fluid bed reactor. Such a reactor and means for operating it are described in U.S. Patent No. 4,011,382; U.S. Patent 4,302, 566; and U.S. Patent 4,481,301. The polymer produced in such a reactor contains the catalyst particles because the catalyst is not separated from the polymer.

Preferably, in accordance with this invention, bimodal ethylene polymer blends having a desirable combination of processability and mechanical properties are produced by a process including the steps of polymerizing gaseous monomeric compositions comprising a major proportion of ethylene in at least two gas phase, fluidized bed reactors operating in the tandem mode under the following conditions. In the first reactor, a gas comprising monomeric composition and, optionally, a small amount of hydrogen, is contacted under polymerization conditions with a catalyst of the invention, at a hydrogen/ethylene molar ratio of no higher than about 0.3 and an ethylene partial pressure no higher than about 690 kPa (100 psia) such as to produce a relatively high molecular weight (HMW) polymer powder wherein the polymer is deposited on the catalyst particles. The HMW polymer powder containing the catalyst is then transferred to a second reactor with, optionally, additional activator (or cocatalyst) which may be the same or different from the cocatalyst utilized in the first reactor but with no additional transition metal catalyst component, together with a gaseous mixture comprising hydrogen and monomeric composition wherein additional polymerization is carried out at a hydrogen/ethylene molar ratio of at least 0.9, the ratio being sufficiently high such that it is at least 8.0 times that in the first reactor, and an ethylene partial pressure at least 1.7 times that in the first reactor, to produce a relatively low molecular weight (LMW) polymer much of which is deposited on and within the HMW polymer/catalyst particles from the first reactor, such that the fraction of HMW polymer in the bimodal polymer leaving the second reactor is at least 0.35.

The foregoing conditions provide for a process wherein the production of fines tending to foul compressors and other equipment is kept to a relatively low level. Moreover, such conditions provide for an inhibited level of productivity in the first reactor with a resulting increased level of productivity in the second reactor to produce a bimodal polymer blend having a favorable melt flow ratio (MFR, an indication of molecular weight distribution) and a high degree of homogeneity (indicated by low level of gels and low heterogeneity index) caused by a substantial degree of blending of HMW and LMW polymer in each final polymer particle inherently resulting from the process operation. The bimodal blend is capable of being processed without undue difficulty into films and containers for household industrial chemicals having a superior combination of mechanical properties.

The gaseous monomer entering both reactors may consist wholly of ethylene or may comprise a preponderance of ethylene and a minor amount of a comonomer such as a alpha-olefin containing 3 to 10 carbon atoms. The comonomer may be present in the monomeric compositions entering either or both reactors.

In many cases, the monomer composition will not be the same in both reactors. For example, in making resin intended for high density film, it is preferred that the monomer entering the first reactor contain a minor amount of comonomer such as 1-hexene so that the HMW component of the bimodal product is a copolymer, whereas the monomer fed to the second reactor consists essentially of ethylene so that the LMW component of the product is substantially an ethylene homopolymer. When a comonomer is employed so as to obtain a desired copolymer in either or both reactors, the molar ratio of comonomer to ethylene may be in the range, for example, of 0.005 to 0.7, preferably 0.04 to 0.6.

Hydrogen may or may not be used to modulate the molecular weight of the HMW polymer made in the first reactor. Thus, hydrogen may be fed to the first reactor such that the molar ratio of hydrogen to ethylene ($H_2/C_2$ ratio) is, for example, up to 0.3, preferably 0.005 to 0.2. In the second reactor it is necessary to produce a LMW polymer with a low enough molecular weight and in sufficient quantity so as to produce a bimodal resin which can be formed, with a minimum of processing difficulties, into end use products such as films and containers for household industrial chemicals having a superior combination of mechanical properties. For this purpose, hydrogen is fed to the second reactor with the ethylene containing monomer such that the hydrogen to ethylene mole ratio in the gas phase is at least 0.9, preferably in the range of 0.9 to 5.0 and most preferably in the range of 1.0 to 3.5. Moreover, to provide a sufficient difference between the molecular weights of the polymers in the first and second reactor so as to obtain a bimodal resin product having a wide enough molecular weight distribution necessary for the desired levels of processability and mechanical properties, the hydrogen to ethylene mole ratios in the two reactors should be such that the ratio in the second reactor is at least 8.0 times the ratio in the first reactor, for example in the range 8.0 to 10,000 times such ratio, and preferably 10 to 200 times the ratio in the first reactor.

Utilizing the hydrogen to ethylene ratios set out previously to obtain the desired molecular weights of the HMW and LMW polymers produced in the first and second reactors respectively tends to result in relatively high polymer productivity in the first reactor and relatively low productivity in the second reactor. This tends to result in turn in a bimodal polymer product containing too little LMW polymer to maintain satisfactory processability. A significant part of this invention lies in the discovery that this effect can be largely overcome by employing ethylene partial pressures in the two reactors so as to reduce the polymer productivity in the first reactor and raise such productivity in the second reactor. For this purpose, the ethylene partial pressure employed in the first reactor is no higher than about 690 KPa (100 psia), for example in the range of 103 kPa to 690 kPa (15 to 100 psia), preferably in the range of 138 kPa to 552 kPa (20 to 80 psia) and the ethylene partial pressure in the second reactor is, for example in the range of 179 kPa to 1172 kPa (26 to 170 psia) preferably 310 kPa to 827 kPa (45 to 120 psia), with the ethylene partial pressures in any specific process being such that the ratio of ethylene partial pressure in the second to that in the first reactor is at least 1.7, preferably 1.7 to 7.0, and more preferably 2.0 to 4.0.

If desired for any purpose, e.g., to control superficial gas velocity or to absorb heat of reaction, an inert gas such as nitrogen may also be present in one or both reactors in addition to the monomer and hydrogen. Thus the total pressure in both reactors may be in the range, for example, of 793 to 4240 kPa (100 to 600 psig), preferably 1482 to 2517 kPa (200 to 350 psig).

The temperature of polymerization in the first reactor may be in the range, for example, of 60 to 130°C, preferably 60 to 90°C, while the temperature in the second reactor may be in the range, for example, of 80 to 130°C, preferably 90 to 120°C. For the purpose of controlling molecular weight and productivity in both reactors, it is preferred that the temperature in the second reactor be at least about 10°C higher, preferably 30 to 60°C higher than that in the first reactor.

The residence time of the catalyst in each reactor is controlled so that the productivity is suppressed in the first reactor and enhanced in the second reactor, consistent with the desired properties of the bimodal polymer product. Thus, the residence time may be, for example, 0.5 to 6 hours, preferably 1 to 3 hours in the first reactor, and, for example, 1 to 12 hours, preferably 2.5 to 5 hours in the second reactor, with the ratio of residence time in the second reactor to that in the first reactor being in the range, for example, of 5 to 0.7, preferably 2 to 1.

The superficial gas velocity through both reactors is sufficiently high to disperse effectively the heat of reaction so as to prevent the temperature from rising to levels which could partially melt the polymer and shut the reactor down, and high enough to maintain the integrity of the fluidized beds. Such gas velocity is in the range, for example, of 40 to 120, preferably 50 to 90 cm/sec.

The productivity of the process in the first reactor in terms of grams of polymer per gram atom of transition metal in the catalyst multiplied by $10^6$, may be in the range, for example, of 1.6 to 16.0, preferably 3.2 to 9.6; in the second reactor, the productivity may be in the range, for example, of 0.6 to 9.6, preferably 1.6 to 3.5, and in the overall process, the productivity is in the range, for example, of 2.2 to 25.6, preferably 4.8 to 16.0. The foregoing ranges are based on analysis of residual catalyst metals in the resin product.

The polymer produced in the first reactor has a flow index (FI or $I_{21}$, measured at 190°C in accordance with ASTM D-1238, Condition F), for example, of 0.05 to 5, preferably 0.1 to 3 grams/10 min. and a density in the range, for example, of 0.890 to 0.960, preferably 0.900 to 0.940 grams/cc (grams/cc = g/cm$^3$).

The polymer produced in the second reactor has a melt index (MI or $I_2$, measured at 190°C in accordance with ASTM D-1238, Condition E) in the range, for example, of 10 to 4000, preferably 15 to 2000 grams/10 min. and a density in the range, for example, of 0.890 to 0.976, preferably 0.930 to 0.976 grams/cc. These values are calculated based on a single reactor process model using steady state process data.

The final granular bimodal polymer from the second reactor has a weight fraction of HMW polymer of at least about 0.35, preferably in the range of 0.35 to 0.75, more preferably 0.45 to 0.65, a flow index in the range, for example, of 3 to 200, preferably 6 to 100 grams/10 min., a melt flow ratio (MFR, calculated as the ratio of flow index to melt index) in the range, for example, of 60 to 250, preferably 80 to 150, a density in the range, for example, of 0.89 to 0.965, preferably 0.910 to 0.960, an average particle size (APS) in the range, for example, of 127 to 1270, preferably 380 to 1100 µm, and a fines content (defined as particles which pass through a 120 mesh screen) of less than about 10 weight percent, preferably less than about 3 weight percent. With regard to fines content, it has been found that a very low amount of fines are produced in the first (HMW) reactor and that the percentage of fines changes very little across the second reactor. This is surprising since a relatively large amount of fines are produced when the first or only reactor in a gas phase, fluidized bed system is used to produce a relatively low molecular weight (LMW) polymer as defined herein. A probable explanation for this is that in the process of this invention, the LMW polymer formed in the second reactor deposits primarily within the void structure of the HMW polymer particles produced in the first reactor, minimizing the formation of LMW fines. This is indicated by an increase in settled bulk density (SBD) across the second reactor while the APS stays fairly constant.

When pellets are formed from granular resin which was stabilized and compounded with two passes on a Brabender extruder to ensure uniform blending, such pellets have a flow index in the range, for example, of 3 to 200, preferably 6 to 100 grams/10 min., a melt flow ratio in the range, for example, of 60 to 250, preferably 80 to 150, and a heterogeneity index (HI, the ratio of the FIs of the granular to the pelleted resin) in the range for example of 1.0 to 1.5, preferably 1.0 to 1.3. HI indicates the relative degree of inter-particle heterogeneity of the granular resin.

The following Examples illustrate the invention.

The properties of the polymers produced in the Examples were determined by the following test methods:

| | |
|---|---|
| Melt Index (MI), $I_2$ | ASTM D-1238- Condition E - Measured at 190°C - reported as grams per 10 minutes. |
| High Load Melt Index (HLMI) $I_{21}$ | ASTM D-1238 - Condition F - Measured at 10°5 times the weight used in the melt index test above. |

$$\text{Melt Flow Ratio (MFR)} = \frac{I_{21}}{I_2}$$

| | |
|---|---|
| Productivity | The polymer produced in one hour in a slurry polymerization reactor is weighted and divided by the weight of the catalyst precursor added to the reactor. The data is normalized to 690 kPa (100 psi) of ethylene pressure. |

EXAMPLES

Catalyst Preparation

All manipulations were conducted under a nitrogen atmosphere by using standard Schlenk techniques. Into a 200 ml Schlenk flask was placed 7.0 grams of Davison grade 955 silica, which was previously dried under a nitrogen purge at 600°C for about 16 hours. Hexane (90 ml) was added to the silica.

Dibutylmagnesium (7.0 mmol) was added to the stirred slurry at 50-55°C and stirring was continued for one hour to produce white product, carbon tetrachloride (9.2 mmol) was added to the slurry (50-55°C) and stirring was continued for one hour during which time the color usually changed from white to brown. TiC1$_4$ (7.0 mmol) was added to the reaction flask (50-55°C) and stirring was continued for an additional hour. Hexane was then removed by distillation with a nitrogen purge at 50-55°C. Yield varied from 8.0-9.3 grams depending on the halogen containing reagent employed.

Polymerization

Ethylene/1-hexene copolymers were prepared with these catalysts under the same polymerization conditions. A typical example is shown below.

A 1.6 liter stainless steel autoclave under a slow nitrogen purge at 50°C was filled with 750 ml of dry hexane, 30 ml of dry 1-hexene, and 3.0 mmol of triethylaluminum. The reactor was closed, the stirring was increased to 900 rpm, and the internal temperature was increased to 85°C. The internal pressure was raised 83 kPa (12 psi) with hydrogen. Ethylene was introduced to maintain the pressure at about 827 kPa (120 psi). The internal temperature was decreased to 80°C, 20.0 mg of catalyst was introduced into the reactor with ethylene over-pressure, and the internal temperature was increased and held at 85°C. The polymerization was continued for 60 minutes, and then the ethylene supply was stopped and the reactor was allowed to cool to room temperature. The polyethylene was collected and air dried.

Given below are the catalyst productivities and polymer flow indexes and melt flow ratios ($I_{21}/I_2$). The catalysts were prepared according to the sequence.

| | | DBM | Oxidizing Agent | | TiCl$_4$ | | |
|---|---|---|---|---|---|---|---|
| | Silica ----------> | ----------------> | | ------------> | | | |
| Ex. No. | Halogen Reagent | (1) Productivity | Co-Catalyst | Flow Index | H$_2$(2) kPa(Psi) | MFR |
| 1 | None (Control) | 590 | TEAL | 2.4 | 83(12) | 70.1 |
| 5 | carbon tetrachloride | 4660 | TEAL | 7.4 | 83(12) | 35.8 |
| 6 | carbon tetrachloride | 3405 | TEAL | 11.7 | 97(14) | 34.3 |
| 7 | carbon tetrachloride | 4160 | DIBAH | 8.7 | 97(14) | 48.7 |
| 8 | carbon tetrachloride | 3065 | TEAL | 416 | 524(76) | 30.5 |
| 9 | carbon tetrachloride | 3100 | DIBAH | 720 | 524(76) | 36.9 |

(1) g polyethylene/g catalyst/hr/690 kPa (100 psi) ethylene

(2) hydrogen pressure in polymerization reactor

Productivity is given in units of g/g-h-690 kPa (100 psi) ethylene.

The data show that the use of an oxidizing agent (examples 2-9) substantially increases the productivity of the catalyst. Highest productivity was obtained with the carbon tetrachloride-based catalyst. The use of a halogen containing reagent in the preparation of the catalyst also resulted in polymer with a narrower molecular weight distribution relative to a catalyst (example 1) prepared without the halogen containing reagent as indicated by the lower MFR values. The catalyst prepared with iodine gave polymer with the highest flow index (highest Flow Index Response) under our polymerization conditions. The catalysts of this invention all exhibit better flow index response relative to the catalyst prepared without the halogen containing reagent.

Example 7 shows that diisobutylaluminum hydride (DIBAH) as cocatalyst provides higher activity and produces polymer with a broader MWD than the polymer produced with TEAL as cocatalyst (example 6). With high levels of hydrogen in the reactor (examples 8 and 9) DIBAH also provides a higher Flow Index polymer..

The interaction of silica with dibutylmagnesium (DBM), an oxidizing agent, and TiCl$_4$ produces a high activity olefin polymerization catalyst in the presence of the cocatalyst triethylaluminum. The use of the halogen containing reagent greatly increases the activity of the catalyst, narrows the polymer molecular weight distribution, and improves the flow index response of the catalyst.

## Claims

1. An ethylene homopolymerisation or copolymerisation catalyst for producing polymer having an MFR from 20 to 250, which catalyst is obtainable by:

(i) providing a slurry of a solid porous support having -OH groups in a non-polar solvent;
(ii) impregnating the support having -OH groups with RMgR$^1$ compound to form an intermediate, which intermediate has an -OH group: Mg ratio of less than 1, wherein each R and R$^1$, which may be the same or different, represents an alkyl group of 1 to 12 carbon atoms;
(iii) treating the intermediate of step (ii) with an amount of carbon tetrachloride which is soluble in the non-polar solvent and is reactive with the intermediate of step (ii) and which amount is effective to provide a carbon tetrachloride: RMgR$^1$ molar ratio from 0.3 to 3 to form a step (iii) product;
(iv) treating the step (iii) product with TiCl$_4$ to form a titanium containing intermediate which has an -OH group: Ti ratio of less than 1; and
(v) combining the titanium containing intermediate with triethylaluminium or diisobutylaluminium hydride as a cocatalyst, whereby the MFR of the polymer produced is from 30 to 60 at an HLMI of 0.1 to 40,000.

**2.** A catalyst composition according to claim 1, wherein R and $R^1$ are $C_4$ - $C_{10}$ alkyl groups.

**3.** A catalyst composition according to claim 1 or claim 2 wherein the non-polar solvent comprises a hydrocarbon which is a liquid at ambient conditions.

**4.** A catalyst composition according to any preceding claim, wherein the amount of the $TiCl_4$ present in step (iii) is such that the molar ratio of Mg to Ti is from 0.5 to 2.

**5.** A catalyst composition according to claim 4 wherein the amount of the $TiCl_4$ present in step (iii) is such that the molar ration of Mg to Ti is from 0.75 to 1.5.

**6.** A catalyst composition according to any preceding claim, wherein the amount of the organomagnesium composition used in step (i) is such that the molar ratio Mg:OH is from 1:1 to 3:1.

**7.** A catalyst composition according to any preceding claim wherein the solid, porous carrier comprises silica which, prior to contact thereof with the solvent in step (i), is heated at a temperature of at least 200°C.

**8.** A catalyst composition according to claim 7 wherein the silica has, after heating, a surface hydroxyl group concentration of about 0.7 m moles/g, a surface area of about 300 $m^2$/gram and a pore volume of about 1.65 $m^3$/gram.

**9.** A catalyst according to any preceding daim wherein the aluminium compound comprises triethylaluminium, and the MFR of the polymer produced is 35 to 40 or comprises dibutylaluminium hydride and the MFR of the polymer product is 40 to 50.

**10.** An ethylene homopolymerisation or copolymerisation process which process comprises contacting a feed comprising ethylene, under ethylene homopolymerisation or copolymerisation conditions, with a catalyst as defined in any of claim 1 to 9.

**11.** A catalytic process for producing bimodal polyethylene homopolymer or copolymer, which process comprises polymerising gaseous monomeric compositions comprising a major proportion of ethylene in at least two gas phases, in the tandem mode, wherein in a first phase, a gas comprising monomeric ethylene and, optionally, a small amount of hydrogen, is contacted under polymerization conditions with a catalyst, at a hydrogen/ethylene molar ratio of up to 0.3 and an ethylene partial pressure up to 690 kPa (100 psia) such as to produce a relatively high molecular weight (HMW) polymer powder wherein the polymer is admixed with the catalyst; and wherein, the HMW polymer powder containing the catalyst is then transferred to a second phase together with a gaseous mixture comprising hydrogen and an ethylene wherein additional polymerisation, in said second phase is carried out at a hydrogen/ethylene molar ratio of at least 0.9, the ratio being sufficiently high such that it is at least 8.0 times that in the first phase, and an ethylene partial pressure of 1.7 times that in the first phase, to produce a relatively low molecular weight (LMW) polymer, such that the fraction of HMW polymer in the bimodal polymer leaving the second reactor is at least 0.35, wherein the catalyst controls the molecular weight distribution of polymer product as determined by MFR, wherein the catalyst is as defined in any of claim 1 to 9.

**12.** A process according to claim 11 wherein monomer in the first phase contains a minor amount of comonomer so that the HMW component of the bimodal product is a copolymer, wherein the gaseous mixture to the second phase consists essentially of ethylene so that the LMW component of the product is substantially an ethylene homopolymer.

**Patentansprüche**

**1.** Ethylenhomopolymerisations- oder -copolymerisationskatalysator zum Herstellen eines Polymers mit einem MFR-Wert von 20 bis 250, erhältlich durch

(i) Bereitstellen einer Aufschwemmung eines festen porösen Trägers mit OH-Gruppen in einem nichtpolaren Lösungsmittel;

(ii) Imprägnieren des OH-Gruppen aufweisenden Trägers mit einer $RMgR^1$-Verbindung, um ein Zwischenprodukt herzustellen, das ein OH-Gruppen/Mg-Verhältnis von weniger als 1 aufweist, wobei jeder Rest R und $R^1$,

die gleich oder verschieden sein können, einen Alkylrest mit 1 bis 12 Kohlenstoffatomen bedeutet;

(iii) Behandeln des Zwischenprodukts der Stufe (ii) mit einer Menge an Kohlenstofftetrachlorid, die in dem nichtpolaren Lösungsmittel löslich und gegenüber dem Zwischenprodukt der Stufe (ii) reaktionsfähig ist, wobei die Menge wirksam ist, um ein Kohlenstofftetrachlorid/RMgR$^1$-Molverhältnis von 0,3 bis 3 zu erhalten, um ein Produkt der Stufe (iii) zu bilden;

(iv) Behandeln des Produkts der Stufe (iii) mit TiCl$_4$, um ein titanhaltiges Zwischenprodukt zu bilden, das ein OH-Gruppen/Ti-Verhältnis von weniger als 1 aufweist, und

(v) Kombinieren des titanhaltigen Zwischenprodukts mit Triethylaluminium oder Diisobutylaluminiumhydrid als einem Cokatalysator, wobei der MFR-Wert des hergestellten Polymers 30 bis 60 bei einem HLMI-Wert von 0,1 bis 40000 beträgt.

2. Katalysatorzusammensetzung nach Anspruch 1, worin R und R$^1$ C$_4$-C$_{10}$-Alkylreste bedeuten.

3. Katalysatorzusammensetzung nach Anspruch 1 oder 2, worin das nichtpolare Lösungsmittel einen Kohlenwasserstoff enthält, der bei Umgebungsbedingungen eine Flüssigkeit ist.

4. Katalysatorzusammensetzung nach einem der vorstehenden Ansprüche, worin die Menge des in der Stufe (iii) anwesenden TiCl$_4$ derart bemessen ist, daß das Molverhältnis von Mg : Ti 0,5 bis 2 beträgt.

5. Katalysatorzusammensetzung nach Anspruch 4, worin die in der Stufe (iii) vorliegende Menge an TiCl$_4$ derart bemessen ist, daß das Molverhältnis von Mg : Ti 0,75 bis 1,5 beträgt.

6. Katalysatorzusammensetzung nach einem der vorstehenden Ansprüche, wobei die in der Stufe (i) verwendete Menge der Organomagnesiumzusammensetzung derart bemessen ist, daß das Molverhälnis Mg : OH 1 : 1 bis 3 : 1 beträgt.

7. Katalysatorzusammensetzung nach einem der vorstehenden Ansprüche, worin der feste poröse Träger Siliciumoxid enthält, das vor seinem Kontakt mit dem Lösungsmittel in der Stufe (i) auf eine Temperatur von mindestens 200°C erhitzt worden ist.

8. Katalysatorzusammensetzung nach Anspruch 7, worin das Siliciumoxid nach dem Erhitzen an der Oberfläche eine Hydroxylgruppenkonzentration von etwa 0,7 mmol/g, eine Oberfläche von etwa 300 m$^2$/g und ein Porenvolumen von etwa 1,65 m$^3$/g aufweist.

9. Katalysator nach einem der vorstehenden Ansprüche, worin die Aluminiumverbindung Triethylaluminium enthält und der MFR-Wert des hergestellten Polymers 35 bis 40 beträgt, oder die Aluminiumverbindung Dibutylaluminiumhydrid enthält und der MFR-Wert des hergestellten Polymerprodukts 40 bis 50 beträgt.

10. Verfahren zur Ethylenhomopolymerisation oder -copolymerisation, bei dem eine Beschickung, die Ethylen enthält, unter Bedingungen der Ethylenhomopolymerisation oder -copolymerisation mit einem Katalysator, wie er in einem der Ansprüche 1 bis 9 definiert ist, in Kontakt gebracht wird.

11. Katalytisches Verfahren zum Herstellen eines bimodalen Polyethylenhomopolymers oder -copolymers, bei dem gasförmige monomere Zusammensetzungen, die einen größeren Anteil an Ethylen enthalten, in mindestens zwei Gasphasen im Tandem-Modus polymerisiert werden, wobei in einer ersten Phase ein Gas, das monomeres Ethylen und gegebenenfalls eine kleine Menge an Wasserstoff enthält, unter Polymerisationsbedingungen bei einem Wasserstoff/Ethylen-Molverhältnis von bis zu 0,3 und einem Ethylenpartialdruck von bis zu 690 kPa (100 psia) derart mit einem Katalysator in Kontakt gebracht wird, daß ein relativ hochmolekulares (HMW) Polymerpulver hergestellt wird, in dem das Polymer mit dem Katalysator gemischt ist, und wobei das den Katalysator enthaltende HMW-Polymerpulver dann zusammen mit einem Gasgemisch, das Wasserstoff und ein Ethylen enthält, in eine zweite Phase überführt wird, wo eine zusätzliche Polymerisation durchgeführt wird, bei der ein Wasserstoff/Ethylen-Molverhältnis von mindestens 0,9 vorliegt, wobei das Verhältnis genügend hoch ist, daß es mindestens das 8,0fache des Verhältnisses in der ersten Phase beträgt, und bei der ein Ethylenpartialdruck herrscht, der das 1,7fache des Partialdrucks in der ersten Phase beträgt, um ein relativ niedrigmolekulares (LMW) Polymer derart herzustellen, daß der Bruchteil des HMW-Polymers in dem bimodalen Polymer, das den zweiten Reaktor verläßt, mindestens 0,35 beträgt, wobei der Katalysator die Molekulargewichtsverteilung des Polymerprodukts, bestimmt durch den MFR-Wert, steuert und wobei der Katalysator wie in einem der Ansprüche 1 bis 9 definiert ist.

12. Verfahren nach Anspruch 11, worin das Monomer in der ersten Phase eine kleinere Menge eines Comonomers enthält, so daß die HMW-Komponente des bimodalen Produkts ein Copolymer ist, und wobei das Gasgemisch zur zweiten Phase im wesentlichen aus Ethylen besteht, so daß die LMW-Komponente des Produkts im wesentlichen ein Ethylen-homopolymer ist.

**Revendications**

1. Catalyseur d'homopolymérisation ou de copolymérisation d'éthylène pour la production d'un polymère ayant un MFR de 20 à 250, lequel catalyseur peut être obtenu par:

   (i) l'apport d'une bouillie d'un support poreux solide ayant des groupes -OH dans un solvant non polaire;
   (ii) l'imprégnation du support ayant des groupes -OH avec un composé $RMgR^1$ pour former un intermédiaire, lequel intermédiaire a un rapport de groupe -OH à Mg inférieur à 1, dans lequel chacun des R et $R^1$, qui peuvent être identiques ou différents, représente un groupe alkyle de 1 à 12 atomes de carbone;
   (iii) le traitement de l'intermédiaire de l'étape (ii) avec une quantité de tétrachlorure de carbone qui est soluble dans le solvant non polaire et peut réagir avec l'intermédiaire de l'étape (ii) et laquelle quantité est efficace pour fournir un rapport molaire tétrachlorure de carbone: $RMgR^1$ de 0,3 à 3 de façon à former un produit de l'étape (iii);
   (iv) le traitement du produit de l'étape (iii) avec du $TiCl_4$ pour former un intermédiaire contenant du titane qui présente un rapport groupe -OH: Ti inférieur à 1; et
   (v) la combinaison de l'intermédiaire contenant du titane avec du triéthylaluminium ou de l'hydrure de diisobutylaluminium en tant que cocatalyseur, de telle sorte que le MFR du polymère produit soit de 30 à 60 avec un HLMI de 0,1 à 40.000.

2. Composition de catalyseur suivant la revendication 1, dans laquelle R et $R^1$ sont des groupes alkyles en $C_{4-10}$.

3. Composition de catalyseur suivant les revendications 1 ou 2, dans laquelle le solvant non polaire comprend un hydrocarbure qui est un liquide dans des conditions ambiantes.

4. Composition de catalyseur suivant l'une quelconque des revendications précédentes, dans laquelle la quantité de $TiCl_4$ présent dans l'étape (iii) est telle que le rapport molaire de Mg à Ti est de 0,5 à 2.

5. Composition de catalyseur suivant la revendication 4, dans laquelle la quantité du $TiCl_4$ présente dans l'étape (iii) est telle que le rapport molaire de Mg à Ti soit de 0,75 à 1,5.

6. Composition de catalyseur suivant l'une quelconque des revendications précédentes, dans laquelle la quantité de la composition organomagniésienne utilisée dans l'étape (i) est telle que le rapport molaire Mg: OH soit de 1:1 à 3:1.

7. Composition de catalyseur suivant l'une quelconque des revendications précédentes, dans laquelle le support poreux solide comprend une silice, qui avant d'être mise en contact avec le solvant dans l'étape (i), est chauffée à une température d'au moins 200°C.

8. Composition de catalyseur suivant la revendication 7, dans laquelle la silice a, après chauffage, une concentration en groupes hydroxy superficiels d'environ 0.7 mmoles/g, une surface spécifique d'environ 300 m$^2$/g et un volume de pores d'environ 1,65 m$^3$/g.

9. Composition de catalyseur suivant l'une quelconque des revendications précédentes, dans laquelle le composé d'aluminium comprend le triéthylaluminium et le MFR du polymère produit est de 35 à 40, ou bien comprend l'hydrure de dibutylaluminium et le MFR du polymère produit est de 40 à 50.

10. Procédé d'homopolymérisation ou de copolymérisation d'éthylène, lequel procédé comprend la mise en contact d'une charge d'alimentation comprenant l'éthylène dans des conditions d'homopolymérisation ou de copolymérisation, avec un catalyseur suivant l'une quelconque des revendications 1 à 9.

11. Procédé catalytique pour la production d'un homopolymère ou d'un copolymère d'éthylène bimodal, lequel procédé comprend la polymérisation de compositions monomères gazeuses comprenant une proportion majeure d'éthylène dans au moins deux phases gazeuses, selon le mode en tandem, où dans une première phase, un gaz comprenant de l'éthylène monomère et éventuellement une petite quantité d'hydrogène, est mise en contact, dans des conditions de polymérisation, avec un catalyseur, à un rapport molaire hydrogène/éthylène allant jusqu'à 0,3 et une pression partielle d'hydrogène allant jusqu'à 690 kPa (100 psia) de façon à obtenir une poudre de polymère de poids moléculaire relativement élevé (HMW) dans laquelle le polymère est mélangé au catalyseur, et où la poudre de polymère HMW contenant le catalyseur est ensuite transféré dans une seconde phase avec un mélange gazeux comprenant de l'hydrogène et de l'éthylène, dans laquelle une polymérisation supplémentaire dans cette seconde phase est effectuée à un rapport molaire hydrogène/éthylène d'au moins 0,9, le rapport étant suffisamment élevé pour être d'au moins 8,0 fois celui qui existe dans la première phase, et à une pression partielle d'éthylène de 1,7 fois celle qui règne dans la première phase, pour donner un polymère de poids moléculaire relativement bas (LMW), de telle sorte que la fraction de polymère HMW dans le polymère bimodal quittant le second réacteur soit d'au moins 0,35, dans lequel le catalyseur contrôle la distribution de poids moléculaire du produit polymère comme cela est déterminé par le MFR, dans lequel le catalyseur est tel que défini suivant l'une quelconque des revendications 1 à 9.

12. Procédé suivant la revendication 11, dans lequel le monomère dans la première phase contient une quantité mineure de comonomère de telle sorte que le composant HMW du produit bimodal est un copolymère, dans lequel le mélange gazeux envoyé dans la seconde phase consiste essentiellement en éthylène de sorte que le composant LMW du produit est notablement un homopolymère d'éthylène.